# EUROPEAN PATENT SPECIFICATION

(11) **EP 3 985 708 B1**
(45) Date of publication and mention of the grant of the patent: **08.10.2025**
(21) Application number: 20202369.3
(22) Date of filing: 16.10.2020
(51) Int. Cl.: H01H 83/20, H01H 71/10, H01H 71/46

(54) **CURRENT BREAKER DEVICE**
STROMSCHUTZSCHALTER
DISPOSITIF DE DISJONCTEUR

(43) Date of publication of application: 20.04.2022
(73) Proprietor: ABB Schweiz AG, 5400 Baden (CH)
(72) Inventor: HERNANDEZ, Jorge Juan Bonilla, 28500 Madrid (ES); IÑIGO, David Ichaso, 45217 Ugena (ES); NAJERA, Carlos Amado, 28038 Madrid (ES); PARELLADA, Josep Maria Pijoan, 28002 Madrid (ES); LAFUENTE, Juan Carlos Rodriguez, 28220 Majadahonda (ES); RINCÓN, Jaime Sosa, 28018 Madrid (ES); AMATO, Massimiliano, 20063 Cernusco sul Naviglio (MI) (IT)
(74) Representative: Maiwald GmbH

(56) References cited:
- CN-B- 106 548 912
- CN-U- 207 381 953
- FR-A- 1 535 195
- JP-U- H0 543 743
- US-A- 5 920 451
- US-A1- 2009 021 879

## Description

### Technical field

The subject matter disclosed herein relates to current breakers, and in particular, to compact residual current breaker devices with overcurrent and leakage current protection.

### Background of the invention

Typically, circuit breaker devices, particularly including a residual-current device (RCD), on the market require two modules of space in the electrical enclosure. A residual-current device is an electrical wiring device that protects a circuit if an electric current is not balanced between an energized conductor and a neutral conduction path. Thus RCDs provide leakage current protection, absent overcurrent and short circuit protection. Thus, conventional RCDs may be physically separate from circuit breaker devices, and often require substantially additional physical space either by being connected serially to a device, or within the device, intended to be protected, or alongside the overcurrent protection devices. A reduced width of a circuit breaker device including leakage current protection enables extended installations, where space for installation is limited, or enables to upgrade installations for existing enclosures.

Document US 5,920,451 A relates to circuit breaker assemblies having multiple circuit breakers and an earth leakage fault detection circuit for tripping the circuit breakers concurrently.

Document JP H05 43743 U relates to a voltage drop compensation device for detecting a voltage drop of each phase of a three-phase four-wire distribution line.

Document CN 106 548 912 B relates to a low-voltage circuit breaker.

Document US 2009 021 879 A1 is related to fault current interrupters and methods for alternating current (AC) electrical systems.

Document FR 1 535 195 A relates to a protective circuit breaker for fault current, comprising at least one contact, a current transformer, a fault current release, a connection board and a control device.

### Detailed description of the invention

Example embodiments of the present invention provide novel arrangements of conduction paths and switching mechanisms within a circuit breaker which, when arranged accordingly, allow short circuit protection, overcurrent protection and leakage current protection within a single module housing. An example embodiment of the present invention provides a phase line current breaker plus a neutral line current breaker within a single module (e.g., 1W) housing.

Accordingly, the present invention is directed to a current breaker device, and a use of the current breaker device with subject matter as described in the independent claims.

Advantageous modifications of the invention are stated in the dependent claims. All combinations of at least two of the features disclosed in the description, the claims, and the figures fall within the scope of the invention. In order to avoid repetition, features disclosed in accordance with the method shall also apply and be claimable in accordance with mentioned systems.

In this entire description of the invention, the sequence of procedural steps is presented in such a way that the process is easily comprehensible. However, the skilled person will recognize that many of the process steps can also be executed in a different order and lead to the same or a corresponding result. In this sense, the sequence of the process steps can be changed accordingly. Some features are provided with counting words to improve readability or to make the assignment clearer, but this does not imply the presence of certain features.

To achieve these and other advantages and in accordance with the purpose of the invention, as embodied and broadly described herein, there is provided a current breaker device with a phase line current breaker, configured to interrupt an electric conduction path of the phase line current breaker, if a sensor of the phase line current breaker detects a fault; and a neutral line current breaker, configured to interrupt an electric conduction path of the neutral line current breaker, if a sensor of the neutral line current breaker detects a fault. The phase line current breaker and the neutral line current breaker are configured to interrupt the respective conduction path independent of the other line current breaker, if the respective fault is detected. And the phase line current breaker and the neutral line current breaker are configured to trigger the respective other line current breaker to interrupt the electric current path of the respective other line current breaker if the fault is detected by one of the line current breakers.

A line current breaker can be seen as a switch within an electric circuit line, which is configured to electrically couple or interrupt an electrical coupling of the circuit line. This current breaker device enables to build a circuit breaker device including a residual-current device working independently for the phase line and the neutral line within the space of one module of the width of 18 mm only. This provides an 50% space reduction in the electrical enclosure. Using this current breaker device may enable electrical installations in reduced spaces or to expand existing installations. Because of the current breaker device having the two line circuit breaker the current breaker device is separated internally by a central wall to separate the phase line with the neutral line, and provides sufficient space two enable and to house the leaked current detection system.

Both line current breakers for phase line and neutral line provides mechanisms to interrupt their respective electric conduction path for detected faults by the two parts of the current breaker device.

The phase line current breaker may have a mechanism to allow the electrical connection and disconnection of the phase line and a magnetic protection system that provides protection for electrical wiring circuits against short circuits. In addition, the phase line current breaker may provide an electric arc extinguishing system and an overload protection system for electricity consumption.

The neutral line current breaker may have a mechanism to allow the electrical connection and disconnection of the neutral line of an electrical circuitry and a leaked current detector system. In addition, the neutral line current breaker may include a test system to check the correct function of the leaked system detection function. Further the neutral line current breaker may include a differential tripping indicator at an external side of the device and an electric arc extinguishing system.

With other words the circuit breaker device provides two independent mechanisms for interrupting an electric phase line and for interrupting an electric neutral line each after detecting a fault in its specific line. The current breaker device is configured to disconnect each of the line current breaker individually and internally coupled to the other line current breaker to trigger it to also disconnect its electric conduction path. That means if the phase line current breaker detects a short circuit or a current overload in the electrical conduction path of the phase line it first breaks the phase's electrical conduction path and then triggers the neutral line current breaker to interrupt the electric conduction path of the neutral line breaker.

If the neutral line current breaker that detects a fault of a leakage of residual currents, it interrupts the electrical conduction path of the neutral line and triggers the phase line current breaker to also interrupt the electrical current path of the phase line current breaker.

The mechanism of the phase line current breaker and the neutral line current breaker is configured to be modular, as is explained later on, to offer compatibility with other sub-mechanisms to be combined with the line current breakers to include new features for offering new products.

According to an aspect the line current breakers are configured by an internal mechanism of the current breaker device for coupling the line current breakers to trigger the respective other line current breaker to interrupt the electric current path of the respective other line current breaker if the fault is detected by one of the line current breakers.

Such an internal mechanism for coupling the line current breakers may be a mechanism which can be accessed only within the current breaker device without external access and has to be distinguished by an external handle or toggle which may couple the two parts of the current breaker device at the outside for convenience of operation of the current breaker device.

According to an aspect the line current breakers are configured to trigger the neutral line current breaker to interrupt the electrical path with a time delay after the phase line current breaker starts to interrupt its electric conduction path, if the phase line current breaker detects a fault.

If the phase line current breaker is configured to detect short circuits and overloads it may trigger the neutral line current breaker with a delay to limit the arcing at the neutral line current breaker when interrupting the electrical conduction path of the neutral line current breaker.

Such a coupling of the two line current breakers may be provided by a coupling pin protruding from the phase side to the neutral side in cooperation with a lever and a coupling gap to provide a time delay for triggering as described in more detail below.

According to an aspect the phase line current breaker and/or the neutral line current breaker are/is configured to be triggered by an auxiliary device to interrupt the respective electric conduction path.

Such an auxiliary device may be adjacent to the outside part of the phase line current breaker and/or the neutral line current breaker to trigger the respective line current breaker. Because the internal coupling between the two line current breaker may be kept the same, the auxiliary device adjacent to one line current breaker may also trigger the respective other line current breaker including a coupling with a time delay. With other words if an external auxiliary device is mechanically coupled and adjacent to the one line current breaker part of the current breaker device and sends a mechanical disconnection trigger signal to disconnect the line current breaker, the interruption of the electric conduction path of the one line current breaker will be done first by the one line current breaker and then triggers the other line current breaker internally to interrupt its electric conduction path. By different configuration the order of the opening may be changed by modification of parts of the mechanism of the current breaker device, for instance by exchanging parts.

According to an aspect the line current breakers are arranged to be adjacent to each other within the current breaker device; and wherein at least one of the line current breakers is configured by an internal mechanism of the current breaker device for coupling the line current breakers to be triggered by an auxiliary device, which is arranged adjacent to a side of the current breaker device adjacent to the respective other line current breaker.

According to an aspect both line current breakers are configured to be triggered by an auxiliary device adjacent to the respective other line current breaker.

According to an aspect the current breaker device is configured such that the auxiliary device adjacent to the side of the current breaker device, which is adjacent to the neutral line current breaker, triggers the phase line current breaker to interrupt the electrical current path of the phase line current breaker.

According to an aspect the current breaker device is configured such that the auxiliary device adjacent to the side of the current breaker device, which is adjacent to the phase line current breaker, triggers the neutral line current breaker to interrupt the electrical current path of the neutral line current breaker with a time delay after the phase line current breaker starts to interrupt its electric conduction path, if the phase line current breaker detects a fault.

The current breaker device may be configured such that if a disconnection trigger is coming from the side of the phase line current breaker, it is transmitted to the mechanism of the neutral line current breaker by a movement of a pin. This pin may move the external trip lever of the neutral line current breaker trigger the interruption of the electrical conduction path.

According to an aspect the sensor of the phase line current breaker comprises an overcurrent detection sensor and/or a short circuit detection sensor.

According to an aspect the sensor of the neutral line current breaker comprises a leakage current detection sensor.

According to an aspect the sensor of the neutral line current breaker consists of a leakage current detection sensor.

According to an aspect the neutral line current breaker comprises a first latch system and a second latch system mechanically coupled in series configured to be released for breaking the electric conducting path of the neutral line, if the respective fault is detected.

According to an aspect a mechanism of the first latch system and a mechanism of the second latch system are each based at least on two components; and wherein the first latch system and the second latch system have one of the two components in common.

According to an aspect the mechanism of the second latch system is based on three components, which is configured to be released for breaking the electric conducting path of the neutral line, if the respective fault is detected.

According to an aspect a spring for loading a moving contact, which is arranged to provide the electric conduction path of the neutral line current breaker, is a torsion spring.

The neutral line current breaker is configured in such a way that the torsion main spring is used for loading a neutral moving contact in the closed position of the neutral line current breaker and as well for opening the neutral moving contact, as explained in more detail when discussing the figures.

The torsion main spring ensures the open contact operation and provides enough pressure between fixed and moving contact when they are in contact.

The neutral line current breaker may be configured with the torsion main spring, wherein the body of the torsion spring is moving freely and mechanically fixed by ends of two legs of the torsion main spring at the housing and the neutral moving contact. In this way the torsion spring works like a compression spring.

A use of a current breaker device as described above is provided, for protection of an electric circuitry if an electric fault is detected.

A use of the current breaker as described above is provided, wherein the electric circuitry is protected by first interrupting a phase line of the electric circuitry before interrupting a neutral line in case of short circuit and/or overload detected by phase line current breaker.

The current breaker device is configured to open and close both line current breakers by one toggle used as an external handle element that enables the electrical connection and disconnection of both line current breakers.

### Brief description of the drawings

The accompanying drawings, which are included to provide a further understanding of the invention and are incorporated in and constitute a part of this application, illustrate embodiments of the invention and together with the description serve to explain the principle of the invention. The drawings display:
- FIG. 1: depicts a perspective view of a phase line current breaker part of the current breaker device;
- FIG. 2: depicts a perspective view of a neutral line current breaker part of the current breaker device;
- FIG. 3: depicts a schematic drawing of the components of the current breaker device;
- FIG. 4: depicts a schematic drawing of procedural steps of relay delatching operations of the current breaker device;
- FIG. 5: depicts a schematic drawing of procedural steps of phase line delatching operations of the current breaker device;
- FIG. 6: depicts a schematic drawing of procedural steps of auxiliary delatching operations of the current breaker device;
- FIG. 7a: depicts a cut-away perspective view of the neutral line mechanism in an open position;
- FIG. 7b: depicts a cut-away perspective view of the neutral line cooperating mechanism in a closed position;
- FIG. 8a, b: depict a cut-away perspective view of the neutral line cooperating mechanism including trip levers;
- FIG. 9a-b: depict a cut-away perspective view of the neutral line cooperating mechanism in a locked position;
- FIG. 9c-d: depict a cut-away perspective view of the neutral line cooperating mechanism in an unlocked position; and
- FIG. 10: depicts a cut-away perspective view of the neutral line mechanism to be triggered by auxiliary devices.

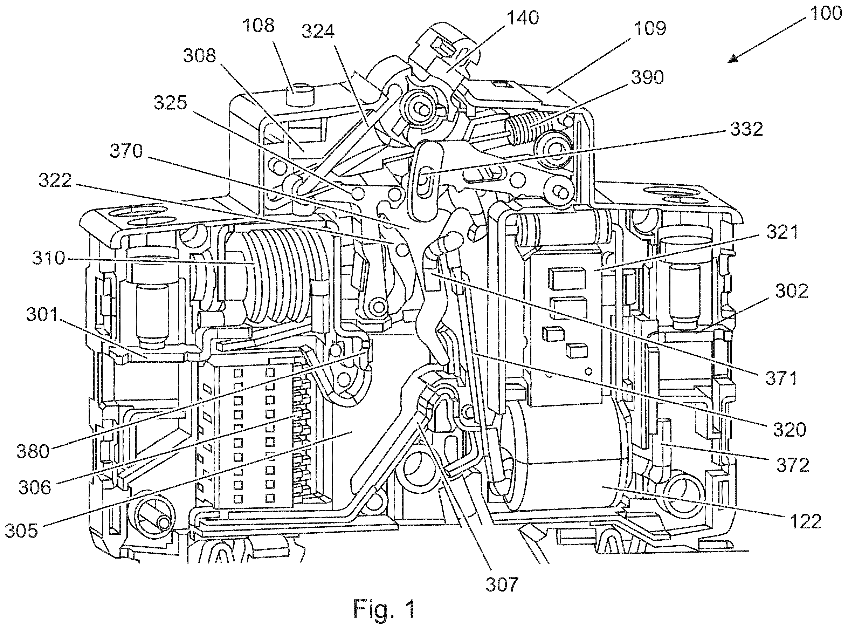

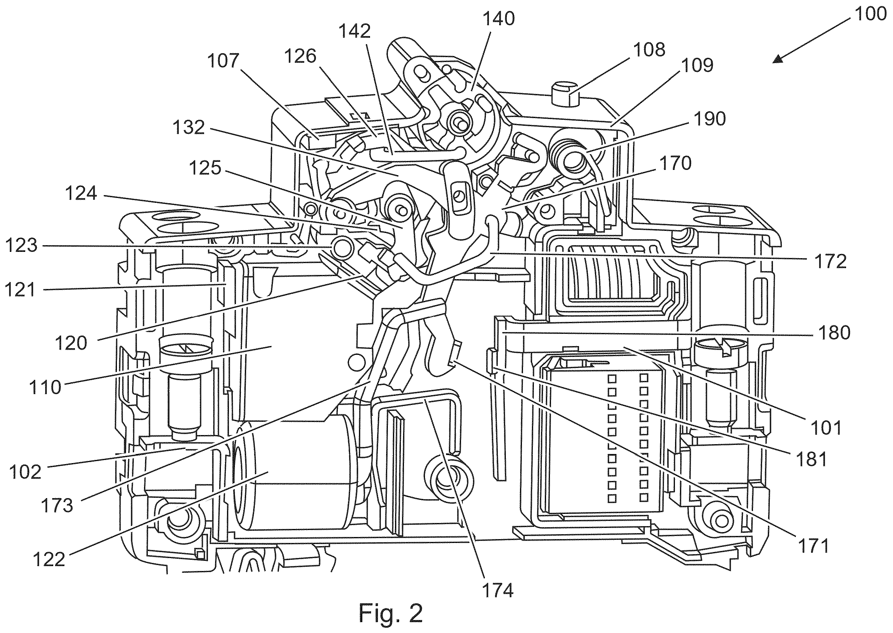

Figure 1 and figure 2 are showing a perspective view of the current breaker device in a first site view depicting the phase line current breaker in figure 1 and in a second site view depicting the neutral line current breaker in figure 2. The module housing 109 of the circuit breaker 100 has envelope dimensions that are the same as standardized single-pole circuit breakers, such as 18 millimetres wide in Europe and 0.75 inches wide in the US, also herein referred to as a 1W width, for example.

The phase line current breaker of the current breaker device as shown in figure 1 is configured to interrupt an electric conduction path of the phase line current breaker, wherein the connection of the electric conduction path of the phase line to an external circuitry may be provided by the phase upstream terminal 301. This terminal 301 is electrically coupled to a first connector of a coil 310 for detecting and interrupting short-circuits. The second connector of the coil 310 is electrically coupled to the fixed phase contact 380 including a contact tip. In closed state the phase line current breaker there is electrical contact to the moving contact 370 of the phase line, which is configured to interrupt the conduction path if a short circuit fault is detected by the coil 310 and/or an overcurrent is detected by the overcurrent detector 320. This moving contact 370 of the phase line is electrically coupled to an overcurrent sensor 320 may be build by a bimetal rod. At the opposite side of the coupling with the moving contact 370 by a braid 371 the overcurrent sensor 320 is electrically coupled to a phase primary wire 372, which is passing through a magnetic core 122 for sensing of leakage currents, as e.g. leakage currents, and is at the opposite end electrically coupled to the downstream terminal 302 of the phase line current breaker 250. The overcurrent sensor 320 is configured to trigger the phase moving contact 370 by a thermal lever 322. A percussor 325 is configured to interact with the coil 310 to trigger the phase moving contact 370 in case of a short circuit. A toggle 140 is configured to interact with the percussor 325 for opening and closing the phase moving contact 370 via a metal rod 342, loading the phase moving contact spring 390 and turning the percussor 325. An arc generated when opening the phase moving contact 370 may be distinguished by arc chamber plates 305 and splitter plates 306, whereby the arc may be guided by an arc runner 307. An electronic circuitry 321 is provided for detecting leakage currents using signals provided by the magnetic core 122.

The phase moving contact 370 is loaded by the phase moving contact spring 390 in the closed position of the phase line current breaker and keeps the phase moving contact in an open position after interrupting the phase line conduction path. The phase moving contact 370 cooperates with a phase external trip lever 332 to interrupt the electric conduction path of the phase line current breaker if the phase external trip lever 332 is turned by an external auxiliary device adjacent to the phase line current breaker part of the current breaker device 100. The phase line current breaker is mechanically coupled with the neutral line current breaker for triggering the neutral line current breaker and vice versa by a pin being part of the phase external trip lever 332 and extending into the direction of the neutral line current breaker 150 through a window of the housing 109 of the current breaker device 100 to interact with the neutral external trip lever. In this way the line current breakers are configured to trigger the respective other line current breaker to interrupt the electric current path of the respective other line current breaker if the fault is detected by one of the line current breakers.

A test button 108 is cooperating with a test button holder 308 to provide a mechanism for testing the current breaker device 100. By pressing the test button 108, phase and neutral get in contact between the main spring 190 and a metallic surface coming from phase two created a leaked current. This makes that leaked current system launch the disconnection of the device. The differential tripping indicator DTI is activated.

The neutral line current breaker of the current breaker device as shown in figure 2 is configured to interrupt an electric conduction path of the neutral line current breaker, wherein the connection of the electric conduction path of the neutral line to an external circuitry may be provided by the neutral upstream terminal 101. This terminal 101 is electrically coupled to a fixed phase contact 180 including a contact tip 181.

In closed state of the neutral line current breaker there is electrical contact to the moving contact 170 of the neutral line current breaker via a neutral moving contact tip 171, which is configured to interrupt the conduction path if a leakage current is detected by the magnetic core 122. This moving contact 170 of the neutral line is electrically coupled to a neutral primary wire 173 which is passing through the magnetic core 122 for detection of leakage currents.

The neutral primary wire 173 is further downstream electrically coupled to the downstream terminal 102 of the neutral line current breaker. The electronic circuitry 121 in cooperation with the magnetic core 122 and a relay 110 is configured to trigger the neutral moving contact 170 by a cooperating mechanism of a latch lever 124, a main lever 125 and the hook lever 126 to trigger the neutral moving contact 170 in case of detected leakage currents.

The toggle 140 is configured to interact with the described cooperating mechanism for opening and closing the neutral moving contact 170 via a metal rod 142, loading the main spring 190 and turning the neutral line cooperating mechanism. An arc, generated when opening the neutral moving contact 170 may be guided by an arc runner 174 together with the extension of the neutral fix contact 180.

The neutral moving contact 170 is loaded by the neutral moving contact spring 190 in the closed position of the neutral line current breaker and keeps the neutral moving contact in an open position after interrupting the neutral line conduction path. The neutral moving contact 170 cooperates with a neutral external trip lever 132 to interrupt the electric conduction path of the neutral line current breaker if the neutral external trip lever 132 is turned by an external auxiliary device adjacent to the neutral line current breaker part of the current breaker device 100. The neutral line current breaker is configured to trigger the phase line current breaker to interrupt the electric current path of the phase line current breaker if the fault current is detected by the neutral line current breaker by turning the external trip lever 132 and/or if an auxiliary device 134 adjacent to the neutral line current breaker site of the current breaker device 100 triggers the neutral line current breaker by turning the external trip lever 132. This is described in more detail below. The neutral line current breaker also provides the differential tripping indicator 107 to indicate the status. The differential tripping indicator 107 works by a slider indicator part with a portion coloured and is polarized by a spring. This part is locked by a polarized lever by another spring. When the relay trip moves the lever and unlocks the slider part, then it moves and the coloured area appears in the external window the coloured area indicating that device has been disconnected by a leaked current detection. When device connects again, the main lever from the cooperating mechanism places the slider indicator part to the first location.

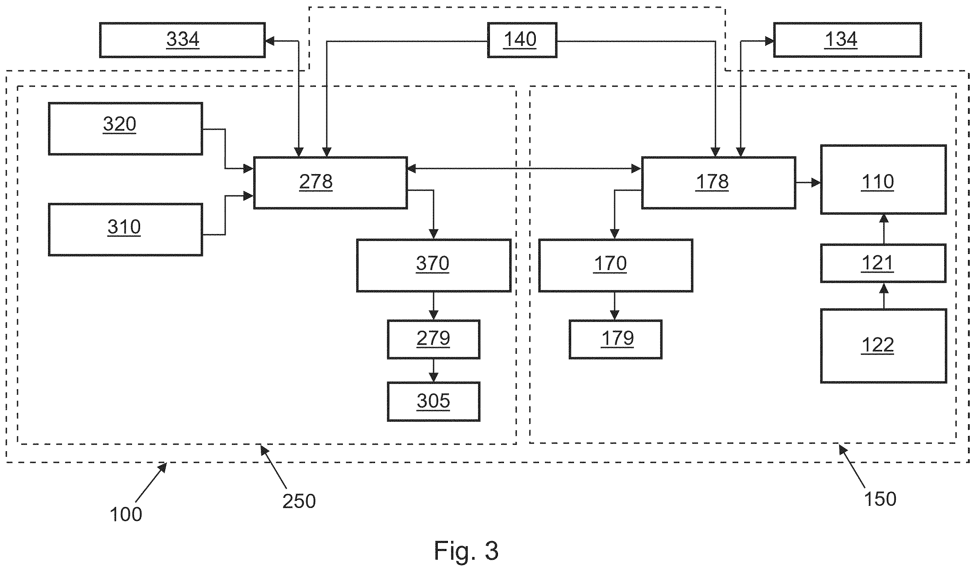

Figure 3 sketches an overview of the cooperating parts of the current breaker device with the phase line current breaker 250 and the neutral line current breaker 150. If an electric short circuit is detected by the coil 310 of the phase line current breaker 250 and/or an overcurrent is detected by the overcurrent sensor 320, which may be a thermal actuator based on bimetal sensor, the phase line cooperating mechanism 278 is turned to trigger the phase moving contact 370 to open the electric conduction path of the phase line current breaker 250. This may initiate an electric arc 279 which is extinguished within the arc chamber 305 of the phase line current breaker. The toggle 140 is configured to cooperate with the phase line cooperating mechanism 278 to open and close the phase moving contact 370. And the phase line current breaker 250 is configured to be triggered by an auxiliary device 334 adjacent to the phase line current breaker part 250 of the current breaker device 100 cooperating with the phase line cooperating mechanism 278. The phase line current breaker 250 is configured to trigger the neutral line current breaker 150 if the phase line current breaker 250 detects a fault by its sensor systems by interaction of the phase line cooperating mechanism 278 and the neutral line cooperating mechanism 178. This triggering of the neutral line current breaker 150 leads to an interruption of the electric conduction path of the neutral line current breaker 150 by turning the neutral line moving contact 170 into the open position. In particular, this coupling between the phase line cooperating mechanism 278 and the neutral line cooperating mechanism 178 may be configured to cooperate with a time delay to reduce the electric arc 179 of the neutral line current breaker 150 when opening the neutral moving contact 170. This is because the electric arc 279 at the phase line current breaker 250 site of the current breaker device 100 acts as resistive component to limit current throughout both phase and neutral line current breaker.

If a leakage current is detected by the magnetic core 122 as part of a leakage current sensor including and electronic circuitry 121 by the neutral line current breaker 150 a neutral line cooperating mechanism 178 is turned by a relay 110 configured as a leakage current actuator to trigger the neutral moving contact 170 to open the electric conduction path of the neutral line current breaker 150. This may initiate an electric arc 179 which is extinguished with the help of the arc runner 174 of the neutral line current breaker 150. The toggle 140 is configured to cooperate with the neutral line cooperating mechanism 178 to open and close the neutral moving contact 170. And the neutral line current breaker 150 is configured to be triggered by an auxiliary device 134 adjacent to the neutral line current breaker part 150 of the current breaker device 100 cooperating with the neutral line cooperating mechanism 178. The neutral line current breaker 150 is configured to trigger the phase line current breaker 250 if the neutral line current breaker 150 detects a leakage by its sensor systems by interaction of the neutral line cooperating mechanism 178 and the phase line cooperating mechanism 278. This triggering of the phase line current breaker 250 leads to an interruption of the electric conduction path of the phase line current breaker 250 by turning the phase line moving contact 370 into the open position.

In particular, this coupling between the neutral line cooperating mechanism 178 and the phase line cooperating mechanism 278 may be done via the external trip levers of the neutral and phase side by a coupling pin protruding from the phase external trip lever 332 to the neutral side in cooperation with the neutral external trip lever 132 and a coupling gap within the neutral external trip lever 132 to provide a time delay for triggering as described in more detail below.

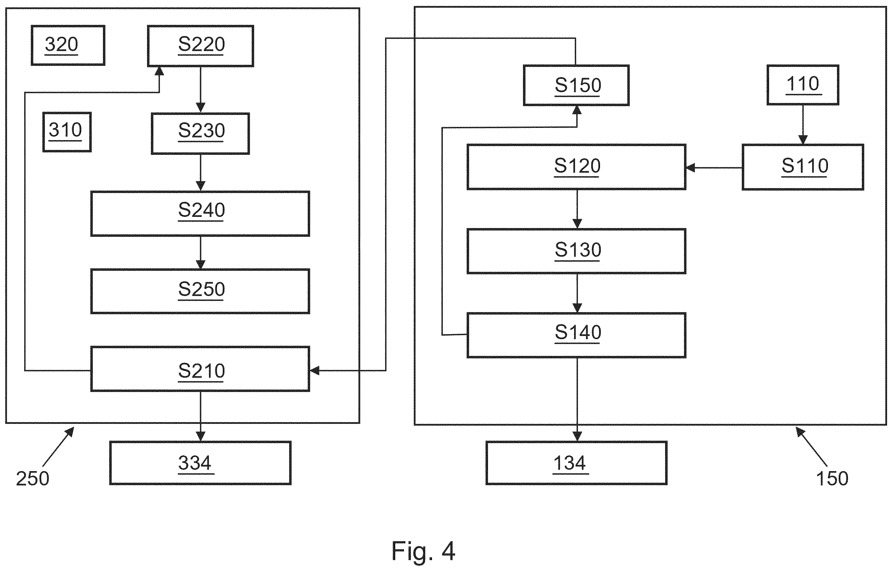

Figure 4 depicts a schematic drawing of procedural steps of neutral line current breaker relay 110 initiated delatching operations of the current breaker device 100. The current breaker device 100 is configured such that:
If the relay 110 is activated by the electronic circuitry 121 because the magnetic core 122 senses a leakage current, it moves the relay reset lever 120 at step S110 which is mechanically coupled to the latch lever 124 to rotate the latch lever 124 and by this delatching a first latching point A of the neutral line cooperating mechanism 178 at step S120 of this delatching operations of the current breaker 100. Because of the rotation of the latch lever 124 the hook lever 126 delatches the second latching point B and by this disengages the toggle metal rod 142 within step S130 which releases the main lever 125 to rotate and by mechanically coupling to the neutral moving contact 170 via the moving contact metal rod 172 opening the electrical contact of the neutral line contact breaker 150 to interrupt the conduction path of the neutral line contact breaker 150 within step S140. The rotation of the neutral moving contact 170 moves the external trip lever 132 of the neutral line current breaker 150 upwards in step S150. This upwards movement of the neutral line external trip lever 134 moves the phase line external trip lever upwards in step S210 whereby the thermal level 322 is activated in step S220 to interact with the percussor 325 in step S230 such that in step S240 the phase line cooperating mechanism 278 delatches and the phase line moving contact 370 opens to interrupt the phase line conduction path in step S250. The upwards movement of the phase line external trip lever 332 in step S 210 may trigger an auxiliary device 334 adjacent to the phase line current breaker site of the current breaker device 100.

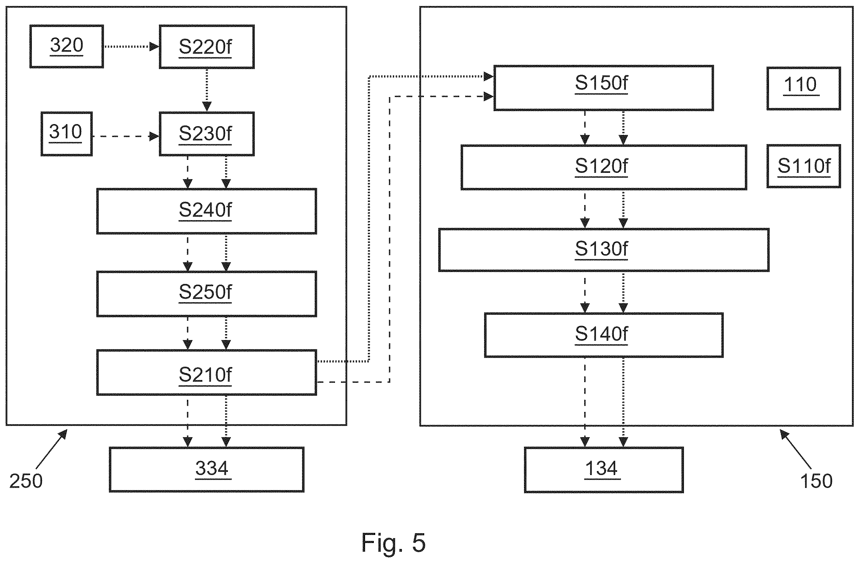

Figure 5 depicts a schematic drawing of procedural steps of phase line current breaker initiated delatching operations of the current breaker device 100. The current breaker device 100 is configured such that:
If the coil 310 is activated by a short circuit and/or the overload sensor 320 is activated by an electrical overload both fault sensors interact with the percussor 325 in step S230f, whereby the overload sensor 320 is coupled to the percussor 325 by the thermal lever 322 in step S220f.

The percussor 325 interacts in step S240f with the phase line cooperating mechanism 278 such that the phase line cooperating mechanism 278 delatches and the phase line moving contact 370 opens to interrupt the phase line conduction path in step S250f. The upwards movement of the phase line external trip lever 332 in step S210f may trigger an auxiliary device 334 adjacent to the phase line current breaker site of the current breaker device 100.

The phase external trip lever 332 is coupled with the neutral external trip lever 132 to move the neutral external trip lever 132 upwards if the phase line external trip lever 332 is moving upwards in step S150f. The neutral external trip lever 132 is coupled to the latch lever 124 to rotate if the neutral external trip lever 132 is moving upwards, in step S120f. The rotation of the latch lever 124 is delatching the first latching point A of the neutral line cooperating mechanism 178 at step S120f. Because of the rotation of the latch lever 124 the hook lever 126 delatches the second latching point B and by this disengages the toggle metal rod 142 within step S130f which releases the main lever 125 to rotate and by mechanically coupling to the neutral moving contact 170 via the moving contact metal rod 172 opening the electrical contact of the neutral line contact breaker 150 to interrupt the conduction path of the neutral line contact breaker 150 within step S140f. The rotation of neutral moving contact 170 moves the external trip lever 132 of the neutral line current breaker 150 upwards in step S150f which may trigger an auxiliary device 134 adjacent to the side of the neutral line current breaker 150 of the current breaker device 100.

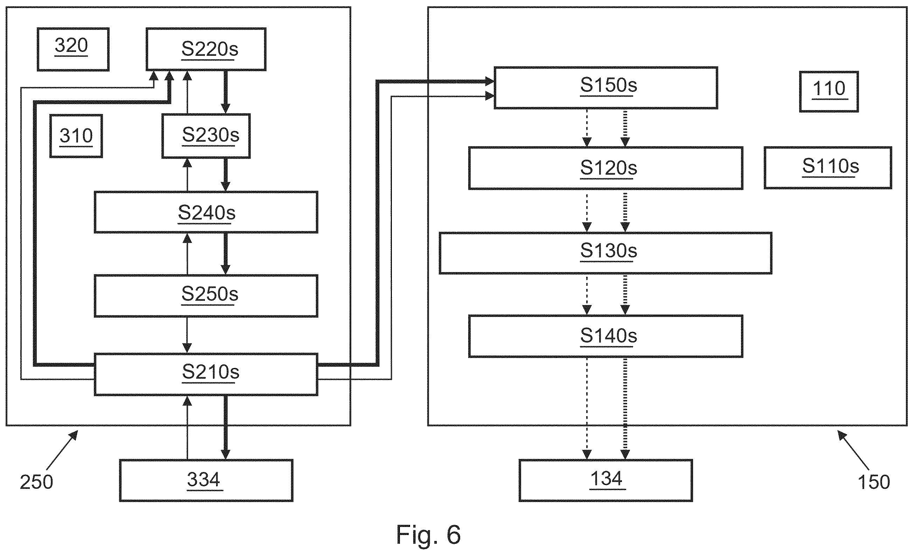

Figure 6 depicts a schematic drawing of procedural steps of delatching operations of the current breaker 100 device by auxiliary devices 134 and 334 adjacent to the current breaker 100.

If the auxiliary device 134 is adjacent to the neutral line current breaker part 150 of the current breaker device 100 the auxiliary device 134 couples mechanically with the external trip lever 132 moving the external trip lever 132 upwards.

This triggers the neutral line current breaker 150 because the neutral external trip lever 132 is coupled to the latch lever 124 to rotate if the neutral external trip lever 132 is moving upwards, in step S120s. The rotation of the latch lever 124 is delatching the first latching point A of the neutral line cooperating mechanism 178 at step S120s. Because of the rotation of the latch lever 124 the hook lever 126 delatches the second latching point B and by this disengages the toggle metal rod 142 within step S130s which releases the main lever 125 to rotate and by mechanically coupling to the neutral moving contact 170 via the moving contact metal rod 172 opening the electrical contact of the neutral line contact breaker 150 to interrupt the conduction path of the neutral line contact breaker 150 within step S140s.

The auxiliary device 134 also triggers the phase line current breaker 250 because the upwards movement of the neutral line external trip lever 134 moves the mechanically coupled phase line external trip lever upwards in step S210s whereby the thermal level 322 is activated in step S220s to interact with the percussor 325 in step S230s such that in step S240s the phase line cooperating mechanism 278 delatches and the phase line moving contact 370 opens to interrupt the phase line conduction path in step S250s. The upwards movement of the phase line external trip lever 332 in step S210s may trigger an auxiliary device 334 adjacent to the phase line current breaker site of the current breaker device 100.

If on the other hand the auxiliary device adjacent and coupled to the phase line current breaker part 250 of the current breaker device 100 triggers the phase external trip lever 332 to move upwards in step S210s whereby the thermal level 322 is activated in step S220s to interact with the percussor 325 in step S230s such that in step S240s the phase line cooperating mechanism 278 delatches and the phase line moving contact 370 opens to interrupt the phase line conduction path in step S250s.

The phase external trip lever 332 is mechanically coupled with the neutral external trip lever 132 to move the neutral external trip lever 132 upwards if the phase line external trip lever 332 is moving upwards in step S150s. The neutral external trip lever 132 is coupled to the latch lever 124 to rotate if the neutral external trip lever 132 is moving upwards, in step S120s. The rotation of the latch lever 124 is delatching the first latching point A of the neutral line cooperating mechanism 178 at step S120s. Because of the rotation of the latch lever 124 the hook lever 126 delatches the second latching point B and by this disengages the toggle metal rod 142 within step S130s which releases the main lever 125 to rotate and by mechanically coupling to the neutral moving contact 170 via the moving contact metal rod 172 opening the electrical contact of the neutral line contact breaker 150 to interrupt the conduction path of the neutral line contact breaker 150 within step S140s. The rotation of the neutral moving contact 170 moves the external trip lever 132 of the neutral line current breaker 150 upwards in step S150s which may trigger an auxiliary device 134 adjacent to the side of the neutral line current breaker 150 of the current breaker device 100.

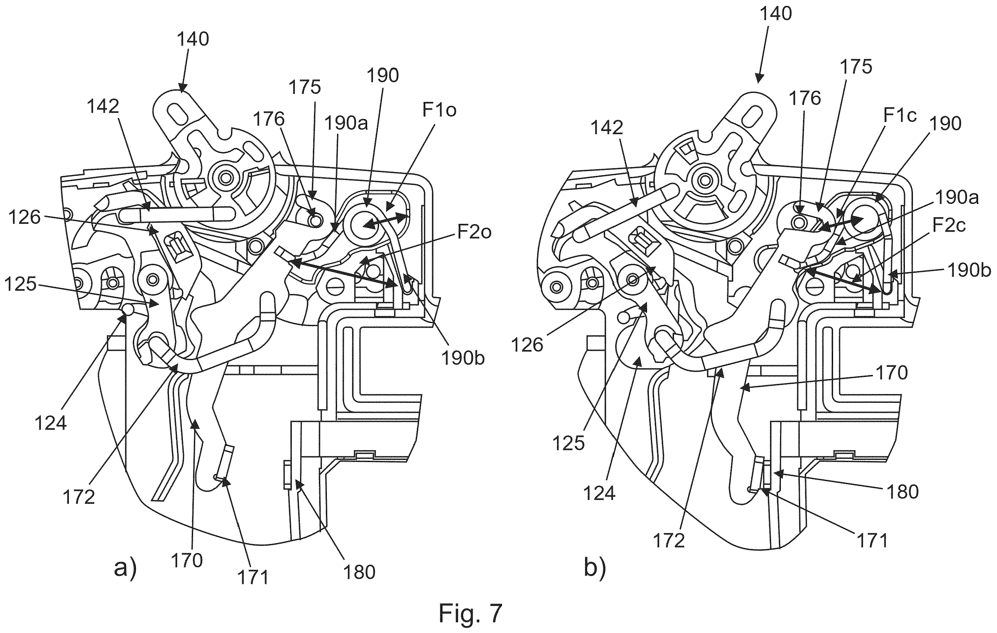

Figure 7a and figure 7b depicts a cut-away perspective view of the mechanism of the neutral line current breaker 150 in an open and respectively closed position. Comparing both figures it can be seen, that the body of the torsion mainspring 190 moves freely between the position as indicated by F1o respectively F1c and that the arms of the torsion mainspring 190 are compressed in the closed position if comparing the indicated arrows F2o respectively F2c. For loading the moving contact 170 in the closed position it can be seen by comparing both figures 7a and 7b, that the position of the axis 176 of the neutral moving contact 170 is changed within the turning slot 175 of the neutral moving contact 170 between the open position in figure 7a and the closed position in figure 7b.

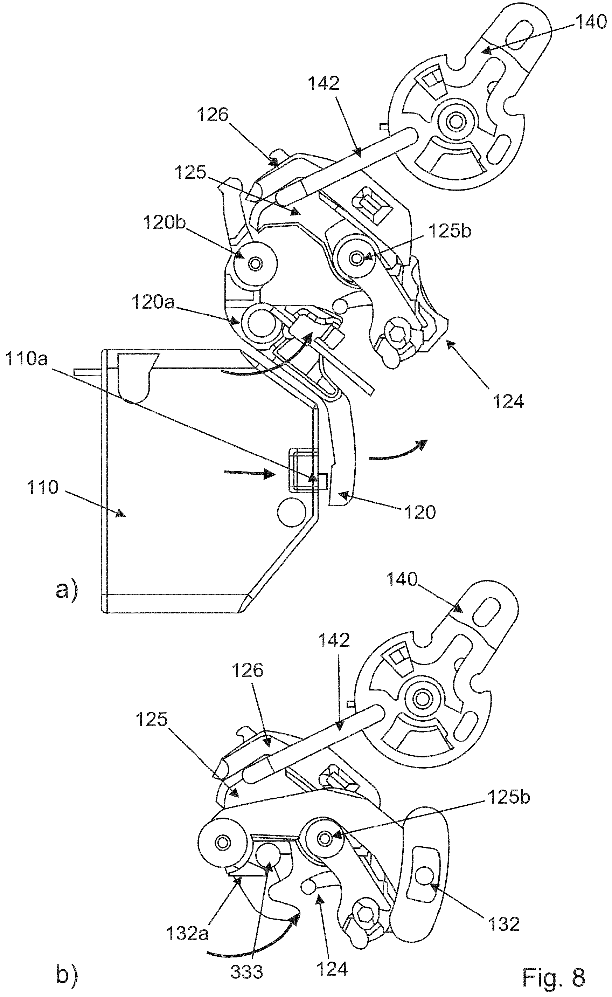

Figure 8a and b depict a cut-away perspective view of the neutral line mechanism including trip levers.

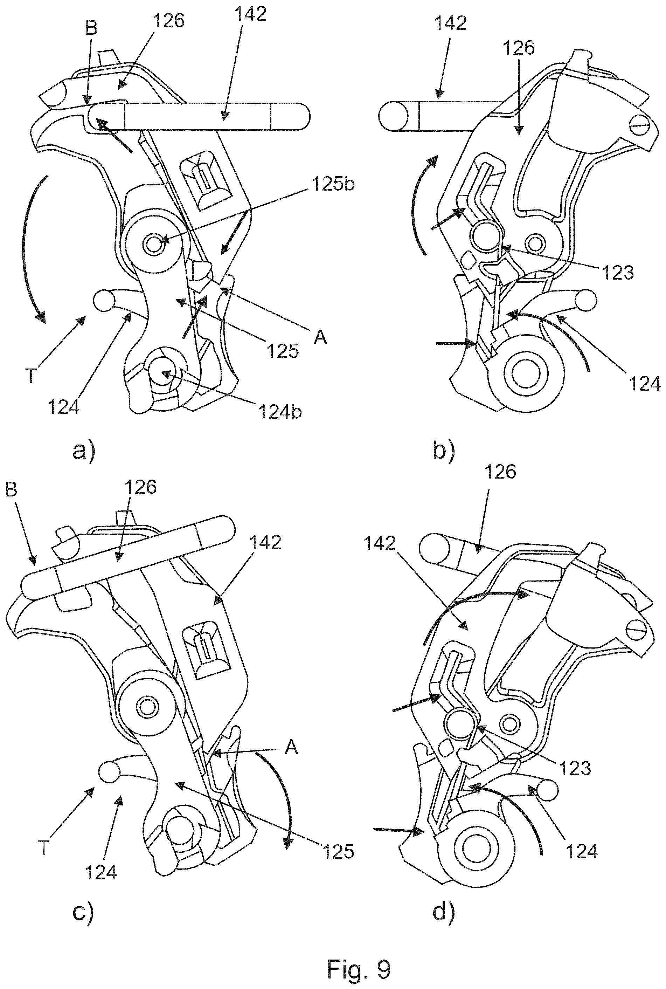

The neutral line current breaker 150 is configured by the relay 110 to initiate delatching operations of the current breaker device 100. If the relay 110 is activated by the electronic circuitry 121 because the magnetic core 122 senses a leakage current, it moves the relay reset lever 120 which is at this time mechanically coupled to the latch lever 124 to rotate the latch lever 124 and by this delatching the first latching point A of the neutral line cooperating mechanism 178, as indicated in figure 9. Because of the rotation of the latch lever 124 about the axis 124b, the hook lever 126 delatches the second latching point B as indicated in figure 9 and by this disengages the toggle metal rod 142, which releases the main lever 125 to rotate about the axis 125b and by mechanically coupling to the neutral moving contact 170 via the moving contact metal rod 172 opening the electrical contact of the neutral line contact breaker 150 to interrupt the conduction path of the neutral line contact breaker 150.

The rotation of the neutral moving contact 170 moves the external trip lever 132 of the neutral line current breaker 150 upwards as indicated in figure 8b. This upwards movement of the neutral line external trip lever 134 moves the phase line external trip lever upwards, because of a coupling link 132a of the neutral external trip lever 132, which may come in mechanical cooperation with a pin 333 of the external trip lever of the phase line.

Figure 9a and 9b is a magnification of the neutral cooperating mechanism lever system for triggering, as indicated by the arrow T, the neutral line current breaker 150 as explained above in the latched position, whereby figure 9b depicts the system from the bottom side to show a reset lever torsion spring 123. The three levers 124, 125, 126 turn at the same time when the toggle metal rod 142 is locked. The levers of the interlocking and releasing function are related to each other by only one spring 123 that polarizes the parts so that they are always correctly positioned.

As explained above the mechanism of the first latch system with the latch lever 124 and the hook lever 126 build the first latching point A of the neutral line cooperating mechanism 178. And the mechanism of the second latch system with the main lever 125 and the hook lever 126 and the toggle metal rod 142 build the second latching point B of the neutral line cooperating mechanism 178. Thus the first latch system and the second latch system have the hook lever component 126 in common.

Figure 9c and 9d is a magnification of the lever system for triggering the neutral line current breaker as explained above in the delatched position, whereby figure 9d depicts the system from the bottom side. If the latch lever 124 is turned as indicated, the main lever 125 is free and the mechanism is unlocked.

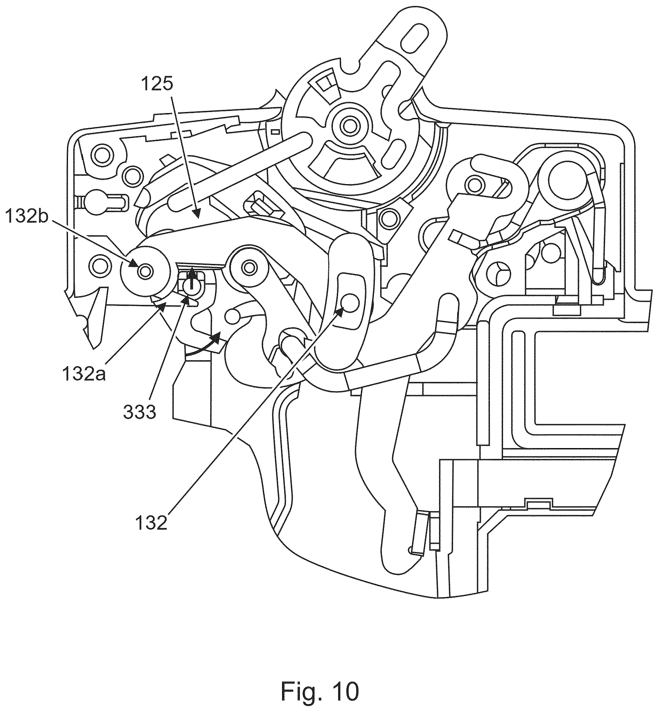

Figure 10 depicts a magnified cut-away perspective view of the neutral line mechanism to be triggered by auxiliary devices. The neutral external trip lever 132 is configured to be rotated about the axis 132b. The neutral external trip lever 132 is configured to be moved upward if the main lever 125 rotates to the delatched position and by this the coupling link 132a may come in mechanical cooperation with the pin 333 of the external trip lever 332 of the phase line to trigger the phase line current breaker 250. Whereby the triggering may have a time delay if there is a distance between the coupling link 132a and the pin 333 of the phase external trip lever 332.

## Claims

1. A current breaker device (100) comprising:
a phase line current breaker (250), configured to interrupt an electric conduction path of the phase line current breaker (250), if a sensor (310, 320) of the phase line current breaker (250) detects a fault; and
a neutral line current breaker (150), configured to interrupt an electric conduction path of the neutral line current breaker (150), if a sensor (122) of the neutral line current breaker(150) detects a fault; **characterized in that**
the phase line current breaker (250) and the neutral line current breaker (150) are configured:
to interrupt the respective conduction path independent of the other line current breaker, by providing two independent mechanisms for interrupting an electric phase line and for interrupting an electric neutral line, after detecting a fault in its specific line; and
the phase line current breaker (250) and the neutral line current breaker (150) are configured to trigger the respective other line current breaker to interrupt the electric current path of the respective other line current breaker if the fault is detected by one of the line current breakers (150, 250),
wherein the line current breakers (150, 250) are configured to trigger the neutral line current breaker (150) to interrupt the electrical path with a time delay after the phase line current breaker (250) starts to interrupt its electric conduction path, if the phase line current breaker (250) detects a fault.

2. The current breaker device (100) according to any one of the preceding claims,
wherein the phase line current breaker (250) and/or the neutral line current breaker (150) are/is configured to be triggered by an auxiliary device (134, 334) to interrupt the respective electric conduction path.

3. The current breaker device (100) according to claim 2,
wherein the line current breakers (150, 250) are arranged to be adjacent to each other within the current breaker device (100); and wherein at least one of the line current breakers (150, 250) is configured by an internal mechanism of the current breaker device (100) for coupling the line current breakers (150, 250) to be triggered by an auxiliary device (134, 334), which is arranged adjacent to a side of the current breaker device adjacent to the respective other line current breaker.

4. The current breaker device (100) according to claim 3,
wherein both line current breakers (150, 250) are configured to be triggered by an auxiliary device (134, 334) adjacent to the respective other line current breaker.

5. The current breaker device (100) according to one of the claims 3 or 4,
wherein the current breaker device (100) is configured such that the auxiliary device (134, 334) adjacent to the side of the current breaker device (100), which is adjacent to the neutral line current breaker (150), triggers the phase line current breaker (250) to interrupt the electrical current path of the phase line current breaker (250).

6. The current breaker device (100) according to one of the claims 3 to 5,
wherein the current breaker device (100) is configured such that the auxiliary device (334) adjacent to the side of the current breaker device (100), which is adjacent to the phase line current breaker (250), triggers the neutral line current breaker (150) to interrupt the electrical current path of the neutral line current breaker (150) with a time delay after the phase line current breaker (250) starts to interrupt its electric conduction path, if the phase line current breaker (250) detects a fault.

7. The current breaker device (100) according to any one of the preceding claims,
wherein the sensor (310, 320) of the phase line current breaker (250) comprises an overcurrent detection sensor (320) and/or a short circuit detection (310) sensor.

8. The current breaker device (100) according to any one of the preceding claims,
wherein the sensor of the neutral line current breaker comprises a leakage current detection sensor (122).

9. The current breaker device (100) according to any one of the preceding claims,
wherein the sensor of the neutral line current breaker consists of a leakage current detection sensor (122).

10. The current breaker device (100) according to any one of the preceding claims,
wherein the neutral line current breaker (150) comprises a first latch system and a second latch system mechanically coupled in series configured to be released for breaking the electric conducting path of the neutral line, if the respective fault is detected.

11. The current breaker device (100) according to claim 10,
wherein a mechanism of the first latch system and a mechanism of the second latch system are each based at least on two components; and wherein the first latch system and the second latch system have one component (142) of the two components in common.

12. The current breaker device (100) according to any one of the preceding claims,
wherein a spring (190) for loading a neutral moving contact (170), which is arranged to provide the electric conduction path of the neutral line current breaker (150), is a torsion spring.

13. Use of a current breaker device (100) according to one of the preceding claims, for protection of an electric circuitry if an electric fault is detected.

14. Use of the current breaker device (100) according to claim 13,
wherein the electric circuitry is protected by first interrupting a phase line of the electric circuitry before interrupting a neutral line in case of short circuit and/or overload detected by phase line current breaker (100).

## Patentansprüche

1. Stromunterbrechervorrichtung (100), aufweisend:
einen Phasenleitungsstromunterbrecher (250), der dazu eingerichtet ist, einen elektrischen Leitungspfad des Phasenleitungsstromunterbrechers (250) zu unterbrechen, wenn ein Sensor (310, 320) des Phasenleitungsstromunterbrechers (250) einen Fehler erkennt; und
einen Neutralleitungsstromunterbrecher (150), der dazu eingerichtet ist, einen elektrischen Leitungspfad des Neutralleitungsstromunterbrechers (150) zu unterbrechen, wenn ein Sensor (122) des Neutralleitungsstromunterbrechers (150) einen Fehler erfasst; **dadurch gekennzeichnet, dass**
der Phasenleitungsstromunterbrecher (250) und der Neutralleitungsstromunterbrecher (150) dazu eingerichtet sind:
den jeweiligen Leitungspfad unabhängig von dem anderen Leitungsstromunterbrecher zu unterbrechen, indem zwei unabhängige Mechanismen zur Unterbrechung einer elektrischen Phasenleitung und zur Unterbrechung einer elektrischen Neutralleitung bereitgestellt werden, nachdem ein Fehler in ihrer spezifischen Leitung erfasst wurde; und
der Phasenleitungsstromunterbrecher (250) und der Neutralleitungsstromunterbrecher (150) dazu eingerichtet sind, den jeweils anderen Leitungsstromunterbrecher auszulösen, um den elektrischen Strompfad des jeweils anderen Leitungsstromunterbrechers zu unterbrechen, wenn der Fehler von einem der Leitungsstromunterbrecher (150, 250) erfasst wird,
wobei die Leitungsstromunterbrecher (150, 250) dazu eingerichtet sind, den neutralen Leitungsstromunterbrecher (150) auszulösen, um den elektrischen Pfad mit einer Zeitverzögerung zu unterbrechen, nachdem der Phasenleitungsstromunterbrecher (250) beginnt, seinen elektrischen Leitungspfad zu unterbrechen, wenn der Phasenleitungsstromunterbrecher (250) einen Fehler erkennt.

2. Stromunterbrechungsvorrichtung (100) nach einem der vorhergehenden Ansprüche,
wobei der Phasenleitungs-Stromunterbrecher (250) und/oder der Neutralleiter-Stromunterbrecher (150) dazu eingerichtet ist/sind, von einer Hilfsvorrichtung (134, 334) ausgelöst zu werden, um den jeweiligen elektrischen Leitungspfad zu unterbrechen.

3. Stromunterbrechungsvorrichtung (100) nach Anspruch 2,
wobei die Leitungsstromunterbrecher (150, 250) so angeordnet sind, dass sie innerhalb der Stromunterbrechervorrichtung (100) nebeneinander liegen; und wobei mindestens einer der Leitungsstromunterbrecher (150, 250) durch einen internen Mechanismus der Stromunterbrechervorrichtung (100) dazu eingerichtet ist, die Leitungsstromunterbrecher (150, 250) zu koppeln, um durch eine Hilfsvorrichtung (134, 334) ausgelöst zu werden, die neben einer Seite der Stromunterbrechervorrichtung neben dem jeweiligen anderen Leitungsstromunterbrecher angeordnet ist.

4. Stromunterbrechungsvorrichtung (100) nach Anspruch 3,
wobei beide Leitungsstromunterbrecher (150, 250) dazu eingerichtet sind, durch eine Hilfsvorrichtung (134, 334) ausgelöst zu werden, die an den jeweils anderen Leitungsstromunterbrecher angrenzt.

5. Stromunterbrechungsvorrichtung (100) nach einem der Ansprüche 3 oder 4,
wobei die Stromunterbrechungsvorrichtung (100) dazu eingerichtet ist, dass die Hilfsvorrichtung (134, 334), die an die Seite der Stromunterbrechungsvorrichtung (100) angrenzt, die an den Neutralleitungsstromunterbrecher (150) angrenzt, den Phasenleitungsstromunterbrecher (250) auslöst, um den elektrischen Strompfad des Phasenleitungsstromunterbrechers (250) zu unterbrechen.

6. Stromunterbrechungsvorrichtung (100) nach einem der Ansprüche 3 bis 5,
wobei die Stromunterbrechungsvorrichtung (100) dazu eingerichtet ist, dass die Hilfseinrichtung (334), die an der dem Phasenstromunterbrecher (250) benachbarten Seite der Stromunterbrechungsvorrichtung (100) angeordnet ist, den Neutralleiter-Stromunterbrecher (150) zur Unterbrechung des elektrischen Strompfades des Neutralleiter-Stromunterbrechers (150) mit einer Zeitverzögerung auslöst, nachdem der Phasenstromunterbrecher (250) beginnt, seinen elektrischen Leitungspfad zu unterbrechen, wenn der Phasenstromunterbrecher (250) einen Fehler erkennt.

7. Stromunterbrechungsvorrichtung (100) nach einem der vorhergehenden Ansprüche,
wobei der Sensor (310, 320) des Phasenleitungsstromunterbrechers (250) einen Überstromerkennungssensor (320) und/oder einen Kurzschlusserkennungssensor (310) umfasst.

8. Stromunterbrechervorrichtung (100) nach einem der vorangehenden Ansprüche,
wobei der Sensor des Neutralleiterstromunterbrechers einen Leckstromerkennungssensor (122) umfasst.

9. Stromunterbrechungsvorrichtung (100) nach einem der vorhergehenden Ansprüche,
wobei der Sensor des Neutralleiterstromunterbrechers aus einem Leckstromerfassungssensor (122) besteht.

10. Stromunterbrechungsvorrichtung (100) nach einem der vorhergehenden Ansprüche,
wobei der Neutralleiter-Stromunterbrecher (150) ein erstes Verriegelungssystem und ein zweites Verriegelungssystem umfasst, die mechanisch in Reihe geschaltet und dazu eingerichtet sind, dass sie ausgelöst werden, um den elektrischen Leitungspfad des Neutralleiters zu unterbrechen, wenn der jeweilige Fehler erkannt wird.

11. Stromunterbrechungsvorrichtung (100) nach Anspruch 10,
wobei ein Mechanismus des ersten Verriegelungssystems und ein Mechanismus des zweiten Verriegelungssystems jeweils auf mindestens zwei Komponenten basieren; und wobei das erste Verriegelungssystem und das zweite Verriegelungssystem eine Komponente (142) der beiden Komponenten gemeinsam haben.

12. Stromunterbrechervorrichtung (100) nach einem der vorhergehenden Ansprüche,
wobei eine Feder (190) zur Belastung eines neutralen beweglichen Kontakts (170), die so angeordnet ist, dass sie den elektrischen Leitungspfad des Neutralleiter-Stromunterbrechers (150) bereitstellt, eine Torsionsfeder ist.

13. Verwendung einer Stromunterbrechungsvorrichtung (100) nach einem der vorhergehenden Ansprüche zum Schutz einer elektrischen Schaltung, wenn ein elektrischer Fehler erkannt wird.

14. Verwendung der Stromunterbrechungsvorrichtung (100) nach Anspruch 13,
wobei die elektrische Schaltung geschützt wird, indem zuerst eine Phasenleitung der elektrischen Schaltung unterbrochen wird, bevor eine neutrale Leitung im Falle eines Kurzschlusses und/oder einer Überlast, die vom Phasenleitungsstromunterbrecher (100) erkannt wird, unterbrochen wird.

## Revendications

1. Dispositif disjoncteur (100) comprenant :
un disjoncteur de ligne de phase (250), configuré pour interrompre un chemin de conduction électrique du disjoncteur de ligne de phase (250), si un capteur (310, 320) du disjoncteur de ligne de phase (250) détecte un défaut ; et
un disjoncteur de ligne de neutre (150), configuré pour interrompre un chemin de conduction électrique du disjoncteur de ligne de neutre (150), si un capteur (122) du disjoncteur de ligne de neutre (150) détecte un défaut ; **caractérisé en ce que**
le disjoncteur de ligne de phase (250) et le disjoncteur de ligne de neutre (150) sont configurés pour :
interrompre le chemin de conduction respectif indépendamment de l'autre disjoncteur de ligne, en fournissant deux mécanismes indépendants d'interruption d'une ligne de phase électrique et d'interruption d'une ligne de neutre électrique, après détection d'un défaut sur sa ligne spécifique ; et
le disjoncteur de ligne de phase (250) et le disjoncteur de ligne de neutre (150) sont configurés pour déclencher l'autre disjoncteur de ligne respectif afin d'interrompre le chemin de courant électrique de l'autre disjoncteur de ligne respectif si le défaut est détecté par l'un des disjoncteurs de ligne (150, 250),
dans lequel les disjoncteurs de ligne (150, 250) sont configurés pour déclencher le disjoncteur de ligne de neutre (150) afin d'interrompre le chemin électrique avec une temporisation après que le disjoncteur de ligne de phase (250) a commencé à interrompre son chemin de conduction électrique, si le disjoncteur de ligne de phase (250) détecte un défaut.

2. Dispositif disjoncteur (100) selon l'une quelconque des revendications précédentes,
dans lequel le disjoncteur de ligne de phase (250) et/ou le disjoncteur de ligne de neutre (150) sont configurés pour être déclenchés par un dispositif auxiliaire (134, 334) afin d'interrompre le chemin de conduction électrique respectif.

3. Dispositif disjoncteur (100) selon la revendication 2,
dans lequel les disjoncteurs de ligne (150, 250) sont agencés de manière adjacente l'un à l'autre au sein du dispositif disjoncteur (100) ; et dans lequel au moins un des disjoncteurs de ligne (150, 250) est configuré, par un mécanisme interne du dispositif disjoncteur (100) destiné à coupler les disjoncteurs de ligne (150, 250), pour être déclenché par un dispositif auxiliaire (134, 334), qui est agencé adjacent à un côté du dispositif disjoncteur adjacent à l'autre disjoncteur de ligne respectif.

4. Dispositif disjoncteur (100) selon la revendication 3,
dans lequel les deux disjoncteurs de ligne (150, 250) sont configurés pour être déclenchés par un dispositif auxiliaire (134, 334) adjacent à l'autre disjoncteur de ligne respectif.

5. Dispositif disjoncteur (100) selon l'une des revendications 3 ou 4,
le dispositif disjoncteur (100) étant configuré de sorte que le dispositif auxiliaire (134, 334) adjacent au côté du dispositif disjoncteur (100), qui est adjacent au disjoncteur de ligne de neutre (150), déclenche le disjoncteur de ligne de phase (250) afin d'interrompre le chemin de courant électrique du disjoncteur de ligne de phase (250).

6. Dispositif disjoncteur (100) selon l'une des revendications 3 à 5,
le dispositif disjoncteur (100) étant configuré de sorte que le dispositif auxiliaire (334) adjacent au côté du dispositif disjoncteur (100), qui est adjacent au disjoncteur de ligne de phase (250), déclenche le disjoncteur de ligne de neutre (150) afin d'interrompre le chemin de courant électrique du disjoncteur de ligne de neutre (150) avec une temporisation après que le disjoncteur de ligne de phase (250) a commencé à interrompre son chemin de conduction électrique, si le disjoncteur de ligne de phase (250) détecte un défaut.

7. Dispositif disjoncteur (100) selon l'une quelconque des revendications précédentes,
dans lequel le capteur (310, 320) du disjoncteur de ligne de phase (250) comprend un capteur de détection de surintensité (320) et/ou un capteur de détection de court-circuit (310).

8. Dispositif disjoncteur (100) selon l'une quelconque des revendications précédentes,
dans lequel le capteur du disjoncteur de ligne de neutre comprend un capteur de détection de courant de fuite (122).

9. Dispositif disjoncteur (100) selon l'une quelconque des revendications précédentes,
dans lequel le capteur du disjoncteur de ligne de neutre consiste en un capteur de détection de courant de fuite (122) .

10. Dispositif disjoncteur (100) selon l'une quelconque des revendications précédentes,
dans lequel le disjoncteur de ligne de neutre (150) comprend un premier système de verrouillage et un deuxième système de verrouillage, couplés mécaniquement en série, configurés pour être libérés afin de rompre le chemin de conduction électrique de la ligne de neutre, si le défaut respectif est détecté.

11. Dispositif disjoncteur (100) selon la revendication 10,
dans lequel un mécanisme du premier système de verrouillage et un mécanisme du deuxième système de verrouillage sont chacun basés sur au moins deux composants ; et dans lequel le premier système de verrouillage et le deuxième système de verrouillage ont un composant (142) en commun parmi les deux composants.

12. Dispositif disjoncteur (100) selon l'une quelconque des revendications précédentes,
dans lequel un ressort (190) destiné à charger un contact mobile de neutre (170), qui est agencé de manière à fournir le chemin de conduction électrique du disjoncteur de ligne de neutre (150), est un ressort de torsion.

13. Utilisation d'un dispositif disjoncteur (100) selon l'une des revendications précédentes, pour la protection d'une circuiterie électrique en cas de détection d'un défaut électrique.

14. Utilisation du dispositif disjoncteur (100) selon la revendication 13,
dans laquelle la circuiterie électrique est protégée en interrompant d'abord une ligne de phase de la circuiterie électrique avant d'interrompre une ligne de neutre en cas de court-circuit et/ou de surcharge détectés par le disjoncteur de ligne de phase (100).
